Europäisches Patentamt

European Patent Office

Office européen des brevets

(19)

(11) Numéro de publication : **0 045 247**
**B1**

(12) **FASCICULE DE BREVET EUROPÉEN**

(45) Date de publication du fascicule du brevet :
09.01.85

(21) Numéro de dépôt : 81401166.4

(22) Date de dépôt : 22.07.81

(51) Int. Cl.⁴ : **G 01 N 1/28**, G 01 N 23/22,
**B 01 L 3/04**

(54) Appareil pour la préparation automatisée d'échantillons d'analyse.

(30) Priorité : 24.07.80 FR 8016410

(43) Date de publication de la demande :
03.02.82 Bulletin 82/05

(45) Mention de la délivrance du brevet :
09.01.85 Bulletin 85/02

(84) Etats contractants désignés :
AT BE CH DE GB IT LI LU NL SE

(56) Documents cités :
BE-A- 873 349
FR-A- 2 253 565
FR-A- 2 381 303
FR-A- 2 428 834
US-A- 3 401 227

(73) Titulaire : INSTITUT DE RECHERCHES DE LA SIDE-
RURGIE FRANCAISE (IRSID) France
185, rue Président Roosevelt
F-78105 Saint-Germain-en-Laye (FR)

(72) Inventeur : Willay, Gérard
Route d'Ars Jussy
F-57130 Ars sur Moselle (FR)
Inventeur : Wittmann, André
4 place du Général De Gaulle
F-57000 Metz (FR)

(74) Mandataire : Ventavoli, Roger
INSTITUT DE RECHERCHES DE LA SIDERURGIE
FRANCAISE (IRSID) 185, rue Président Roosevelt
F-78105 Saint-Germain-en-Laye Cédex (FR)

Jouve, 18, rue St-Denis, 75001 Paris, France

## Description

La présente invention concerne un appareil pour la préparation automatisée d'échantillons d'analyse, selon un processus de fusion-dilution de la matière constitutive de l'échantillon, placée dans un creuset chauffé par induction électrique.

Parmi les appareils du type considéré, on connaît en particulier l'appareil automatique décrit dans le brevet français FR-A-2 381 303 au nom de l'IRSID et qui est essentiellement constitué d'un bâti supportant deux étages superposés :

— un étage de fusion comprenant une bobine à induction alimentée en courant électrique par un générateur haute fréquence, et entourant un creuset destiné à contenir un mélange à fondre, constitutif de l'échantillon, et composé en proportion déterminée d'une prise d'essai placée dans un fondant-diluant approprié très oxydant ;

— et un étage de coulée inférieur comprenant un moyen, tel qu'un récipient, pour recevoir la matière en fusion contenue dans le creuset et achever la préparation de l'échantillon.

L'une des particularités de l'appareil tient au creuset de fusion qui est en métal noble, généralement du platine ou un alliage de platine, de manière à présenter une très bonne conductibilité à la fois de la chaleur et de l'électricité, ainsi qu'une grande inertie chimique.

Cependant, en raison des propriétés de mouillabilité du platine à l'égard de la matière en fusion contenue dans le creuset, cette dernière n'est pas toujours facilement récupérable dans sa totalité au moment de la coulée.

Ceci limite les possibilités de l'appareil et conditionne par conséquent sa conception à la production d'échantillons destinés à des techniques d'analyse qui ne nécessitent pas la totalité de la prise d'essai, par exemple l'analyse par la fluorescence de rayons X (FRX).

Le but de la présente invention est d'élargir l'éventail des échantillons pouvant être produits par le même appareil vers d'autres techniques d'analyse que la FRX, comme l'absorption atomique ou la spectrométrie d'émission optique (SEO) avec excitation par plasma.

A cet effet, l'invention a pour objet un appareil pour la préparation automatisée d'échantillons d'analyse comprenant un bâti supportant deux étages superposés : un étage de fusion comprenant une bobine verticale à induction alimentée en courant électrique par un générateur haute fréquence, un creuset entouré par ladite bobine et destiné à contenir un mélange à fondre, constitutif de l'échantillon, et un étage de coulée inférieur comprenant des moyens pour recevoir la matière en fusion déversée du creuset et achever la préparation de l'échantillon, appareil caractérisé en ce que le creuset présente une structure composite en deux couches concentriques : une couche extérieure en métal noble et une couche intérieure en matériau réfractaire non friable, bon conducteur de la chaleur et présentant des propriétés de non mouillabilité à l'égard de la matière constitutive de l'échantillon, et en ce que les moyens prévus à l'étage de coulée pour recevoir la matière en fusion sont constitués au moins par un logement destiné à recevoir un récipient contenant un solvant approprié pour la mise en solution de la matière en fusion.

On entend par « métal noble » dans le cadre de la présente invention tout métal capable de ne pas s'oxyder, ou de s'oxyder très peu, à chaud au contact de l'air.

Comme on l'a dit, on choisit de préférence le platine qui, en plus, présente une très bonne conductibilité à la fois de la chaleur et de l'électricité.

Selon une caractéristique de l'invention, le solvant est, au moment de la coulée, soumis à une agitation au moyen d'un barreau aimanté immergé, mis en rotation grâce à un agitateur magnétique sur lequel est posé le récipient.

Conformément à une variante de réalisation, le récipient est surmonté par une unité amovible ou escamotable, comprenant une nacelle de coulée en métal noble de préférence de même nature que le récipient extérieur constitutif du creuset et servant pour la solidification de la matière en fusion, et un moyen de préchauffage de la nacelle servant de support à cette dernière.

Comme on le comprend, l'une des idées essentielles à la base de l'invention réside dans une structure composite particulière du creuset de fusion en deux couches annulaires concentriques : une couche extérieure en platine ou alliage de platine et une couche intérieure en carbone vitreux.

De préférence, ces couches sont séparées l'une de l'autre, auquel cas le creuset est constitué simplement de deux récipients emboîtés l'un dans l'autre. Cette conception présente l'avantage de la simplicité au niveau de la réalisation du creuset puisque les récipients en platine et en carbone vitreux de ce type sont aisément disponibles ou accessibles dans le commerce. De plus, le remplacement du carbone, qui s'use fatalement plus rapidement que le platine, peut ainsi être assuré très facilement.

On comprend également que le choix d'un matériau non friable et non mouillant, tel que le carbone vitreux, permet, au moment de la coulée, la récupération de toute la masse de l'échantillon et de toute cette masse seulement. Cette particularité ouvre de nouvelles possibilités aux appareils de préparation automatique d'échantillons d'analyse par fusion inductive et, en particulier, au type d'appareil décrit dans le brevet français FR-A-2 381 303 déjà cité pour lequel le creuset composite évoqué ci-avant constitue un accessoire parfaitement approprié.

En effet, ce genre d'appareil équipé d'un tel creuset voit son domaine d'application s'étendre au-delà de la simple préparation d'échantillons sous forme de pastilles solides (perles) destinées à l'analyse par FRX, et englobe désormais la préparation d'échantillons sous forme liquide (mise en solution acide notamment) destinés à d'autres techniques d'analyse, par exemple l'absorption atomique ou la spectrométrie d'émission optique avec excitation par plasma.

Pour cela, il est nécessaire de couler la matière constitutive de l'échantillon et fondue dans le creuset, non plus dans une nacelle de platine pour solidifier une perle, mais dans un solvant approprié tel que de l'eau acidulée (acide chlorhydrique, par exemple), contenu dans un récipient quelconque, comme un bécher, mis en place sous le creuset.

Il doit être souligné que l'invention élargit considérablement le marché actuel des appareils du genre prémentionné, compte tenu du nombre important de dispositifs d'analyse par absorption atomique en service et du développement actuel de la SEO par plasma.

Il doit être souligné également que les coulées en nacelle de solidification ou dans un liquide de mise en solution ne sont pas exclusives l'une de l'autre, mais peuvent fort bien, conformément à une réalisation de l'invention, être regroupées au sein d'un appareil unique polyvalent équipé à cet effet d'un étage de coulée à double vocation.

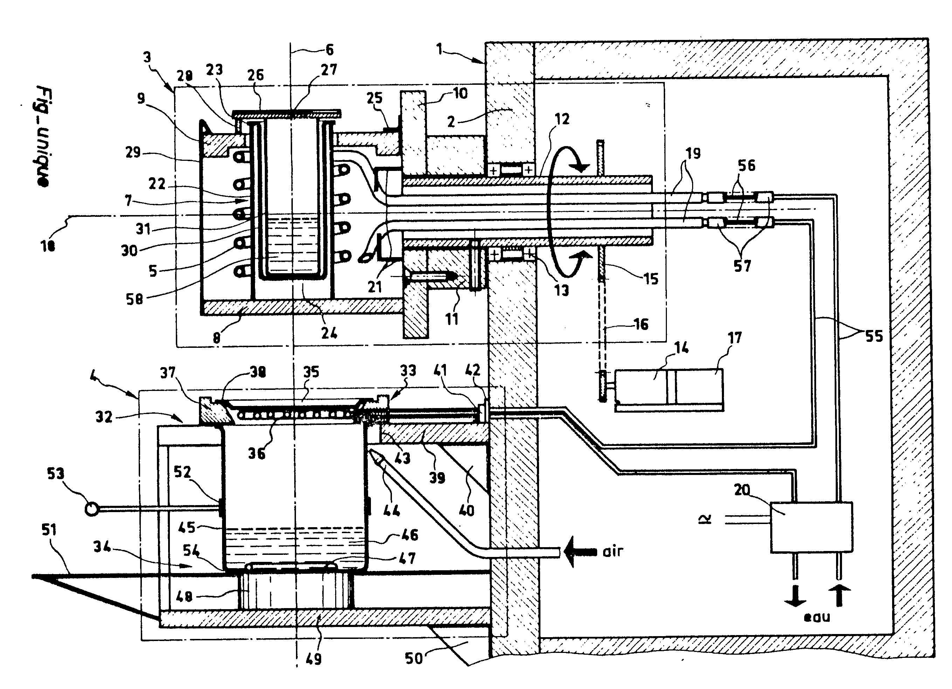

L'invention sera bien comprise et d'autres aspects et avantages ressortiront plus clairement au vu de la description qui suit donnée en référence à la figure unique annexée représentant une vue schématique en coupe longitudinale d'un appareil polyvalent selon un plan vertical passant par l'axe de la bobine de fusion.

Sur la figure, on a représenté un appareil conforme à l'invention constitué d'un bâti 1 formant boîtier dont la face avant 2 est équipée de deux étages superposés : un étage de fusion 3 (encadré supérieur) et en dessous, un étage de coulée 4 (encadré inférieur).

Chaque étage est maintenant décrit en détail.

L'étage de fusion 3 comprend une bobine à induction verticale 5 dont l'axe est symbolisé en 6 et dans laquelle est placé le creuset de fusion 7.

Cet ensemble est monté sur un équipage mobile comprenant une plaque-support 8, un couvercle rabattable 9 fixé sur une pièce d'ancrage 10, elle-même solidarisée par une entretoise 11 à un arbre tubulaire 12 supporté par un palier 13 prévu à cet effet dans la face avant 2 du bâti.

L'arbre est accouplé à un moteur électrique réversible 14 grâce à un pignon denté 15 sur lequel s'engrène une chaîne de transmission 16. Une commande électronique 17 pilote le moteur 14.

L'équipage mobile peut ainsi être mis en rotation alternée autour de l'axe 18 de l'arbre 12 de manière à soumettre le creuset 7 à un mouvement de basculement d'amplitude contrôlée de part et d'autre de l'axe 18.

Comme on le voit, cette dernière est un solénoïde formé par un tube de cuivre rigide dont les prolongements 19 traversent longitudinalement l'arbre 12 et sont reliés à un générateur de courant haute fréquence 20 selon une disposition qui sera décrite plus en détail par la suite.

Des petites pattes de scellement 21 ancrées sur la pièce 10 assurent le maintien de la bobine. On observe également qu'une chemise 22 est placée entre la bobine et le creuset. Cette chemise, en matériau réfractaire et isolant de l'électricité, qui dans le cas présent est à base de silice, remplit une double fonction de protection : une protection électrique en empêchant un contact éventuel entre la bobine et la paroi latérale du creuset et une protection thermique en s'opposant à une trop forte déperdition calorifique du creuset. Accessoirement, la chemise sert également de support au creuset qui, au moyen de sa collerette 23, prend appui sur le bord supérieur de la chemise, ménageant ainsi entre le fond du creuset et la plaque support 8 un espace d'isolation thermique 24.

On voit également que le couvercle 9, rabattable au moyen d'une charnière 25, porte un clapet 26 articulé autour d'un pivot fixé sur le couvercle 9 et non représenté. Ce clapet 26, en venant en butée sur une cale 28, prend position au-dessus du creuset et complète ainsi l'isolation thermique de ce dernier. Le couvercle est verrouillé en position fermée par un clip élastique 29 fixé sur la plaque 8.

Conformément à une caractéristique de l'invention, le creuset 7 de forme cylindrique est formé de deux récipients emboîtés l'un dans l'autre : un récipient extérieur 30 en alliage de platine-or et muni de la collerette 23 et un récipient intérieur 31 en carbone vitreux. Ces deux récipients présentent entre eux un simple jeu fonctionnel suffisant pour permettre un retrait aisé du récipient intérieur en cas de besoin.

L'étage de coulée 4 est constitué de deux unités disposées l'une au-dessus de l'autre, une unité supérieure 32, dont la partie fonctionnelle 33, positionnée sous le creuset 7, est amovible, et une unité inférieure fixe 34.

L'unité supérieure 32 comprend essentiellement une nacelle de coulée 35, en alliage de platine, qui se présente sous la forme d'une petite assiette à large bord, et une bobine à induction plate 36, constituée par un tube de cuivre enroulé en spirale et servant au préchauffage de la nacelle avant la coulée. La bobine 36 est incorporée de fabrication à un bloc annulaire en céramique 37 qui présente un épaulement circulaire 38 servant d'appui à la nacelle. Ainsi, cette dernière prend position au-dessus de la bobine 36, au voisinage immédiat mais sans contact avec elle. Le bloc 37 équipé de la bobine 36 et de la nacelle 35 compose la partie amovible 33 prémentionnée. A cet effet, le bloc 37 est simplement posé sur une console 39 fixée à la face avant 2 du bâti de l'appareil par une équerre 40 et la bobine de préchauffage 36 est reliée au générateur haute fréquence 20 au moyen de raccords rapides 41 en prise sur des bornes 42 de la face 2 et facilement démontables par simple traction sur le bloc 37.

Comme on le voit, la console 39 présente, au niveau du bloc 37, une ouverture 43 au voisinage et en dessous de laquelle débouche un bec 44 prévu pour un soufflage d'air de refroidissement dirigé vers la nacelle 35.

L'unité inférieure 34 comprend essentiellement un bécher 45 contenant un volume déterminé d'eau acidulée 46 (solution d'HCl dans $H_2O$) et un petit barreau magnétique 47.

Ce bécher, à l'instar de la nacelle 35 décrite précédemment, est centré sur, ou du moins au voisinage, de l'axe 6 de la bobine de fusion 5 et repose sur un agitateur magnétique de type classique 48, lui-même supporté par un socle 49 fixé à la face avant du châssis par une seconde équerre 50.

La mise en place ou le retrait du bécher sont réalisés par glissement sur un plancher 51 au moyen d'un collier 52 enserrant le bécher et muni d'une tirette de manœuvre 53. On observe que le plancher 51 dépasse des limites de la console 39 et présente une ouverture 54 par laquelle affleure l'agitateur 48 de manière à permettre un glissement aisé du bécher.

D'autre part, dans l'exemple décrit, l'extrémité supérieure du bécher 45 s'engage dans l'ouverture 43 de la console 39. Dans ces conditions, l'ouverture 43 se présente sous la forme d'une échancrure oblongue afin de laisser le libre passage du bécher lors de sa mise en place sous le creuset ou de son retrait après la coulée.

Comme on le voit, la bobine 5 de fusion de l'échantillon et la bobine 36 de préchauffage de la nacelle de coulée sont montées entre elles en série à l'aide de connexions 55 également constituées de tubes de cuivre et placées à l'intérieur du boîtier 1 avec le générateur haute fréquence 20. Une circulation d'eau à l'intérieur des conducteurs électriques tubulaires assure le refroidissement des deux bobines précitées.

Afin de permettre les mouvements d'oscillation de l'équipage mobile porteur du creuset 2 autour de l'axe 18 comme indiqué par la double flèche, les extrémités des tubes 19 sont raccordées aux tubes fixes 55 à l'aide de tresses souples en cuivre 56, entourées par des manchons également souples 57, par exemple en caoutchouc assurant l'étanchéité du circuit de refroidissement.

On va maintenant décrire un mode de fonctionnement de l'appareil permettant de préparer un échantillon d'analyse.

Lorsque la bobine 5 est excitée par le courant haute fréquence (plusieurs méga Hertz) fourni par le générateur 20, l'accrochage du courant induit se fait au niveau du récipient extérieur 30 en alliage de platine, lequel équilibre rapidement sa température avec celle du récipient intérieur 31 en carbone vitreux, par échange de chaleur qui s'opère essentiellement par rayonnement. Ce chauffage électrique indirect du récipient interne assure une fusion satisfaisante de la matière, constitutive de l'échantillon, qui y est contenue et référencée 58 sur la figure (prise d'essai mélangée à une proportion déterminée d'un diluant très oxydant, comme le tétraborate de lithium, par exemple). Cette fusion, accélérée par le ballotage du creuset, est sensiblement aussi rapide que dans la pratique connue utilisant le creuset de platine seul (de l'ordre de la minute).

Une fois la fusion achevée, un automatisme assure le basculement du creuset en vue de la coulée au moyen d'une rotation suffisante de l'équipage mobile (environ 120°).

Deux possibilités sont offertes quant au choix de l'étage de coulée selon que l'on souhaite préparer un échantillon solide en vue de l'analyse par FRX ou un échantillon à l'état liquide en vue de l'analyse par absorption atomique ou par SEO à plasma par exemple.

Dans le premier cas, la partie amovible 33 est présente sous le creuset, et le bécher 45 est retiré de manière à ne pas gêner le soufflage d'air par le bec 44.

Le contenu 58 du creuset est déversé dans la nacelle 35 préalablement préchauffée par la bobine à induction 36.

Dès la fin de la coulée, qui dure quelques secondes, la bobine 36 est mise hors-tension et une perle se solidifie rapidement dans la nacelle sous l'effet de l'air de refroidissement soufflé dès cet instant par le bec 44.

La nacelle est saisie manuellement à l'aide d'une pince et la perle prête à l'analyse est récupérée par simple retournement de la nacelle.

Dans le second cas, la partie supérieure 33 est bien entendu retirée par simple traction sur le bloc 37 de manière à dégager les raccords 41 et un pontet tubulaire en forme de U, non représenté, est placé sur les bornes 42 de manière à les mettre en court circuit électrique et assurer la circulation interne de l'eau de refroidissement.

Le bécher 45, contenant un volume déterminé 46 d'une solution acide $H_2O$-HCl et le barreau aimanté 47, est poussé en fond d'encoche 43 au moyen de la tirette de manœuvre 53.

Au moment de la coulée, un temporisateur enclenche l'agitateur magnétique 48 qui entraîne le barreau 47 en rotation afin d'assurer un brassage efficace du bain 46. La matière en fusion 58 est alors déversée dans le bécher et le contact brutal avec le liquide 46 à température ambiante provoque une fragmentation de cette matière dont la dispersion, favorisée par l'agitation, assure une facilité supplémentaire pour la mise en solution acide. Après déclenchement automatique de l'agitateur, le bécher est retiré et on finit la mise en solution à chaud avant de faire tous les prélèvements voulus d'échantillons en vue de l'analyse par absorption atomique ou par ICP SEO à plasma notamment.

Il doit être compris que, si la présence du creuset intérieur en carbone vitreux est obligatoire lorsque la coulée se fait en milieu liquide acide, elle n'est pas en toute rigueur nécessaire lorsqu'on coule en nacelle en vue de la préparation d'une perle pour FRX, car, dans cette hypothèse, il n'est pas indispensable de devoir récupérer dans la nacelle la totalité de la masse en fusion dans le creuset.

Toutefois, on peut souhaiter conserver le récipient intérieur pour d'autres raisons, par exemple pour éviter tout risque de dégradation du platine lorsque la matière en fusion constitutive de l'échantillon est de nature susceptible de le détériorer, ce qui est le cas notamment si cette matière contient des phases réduites ou métalliques comme du zinc en particulier. Il doit cependant être souligné que la coulée d'une perle à partir d'un récipient en carbone entraîne une certaine dispersion dans les résultats analytiques sur le fer et de façon plus générale sur tous les éléments oxydables de l'échantillon, car l'atmosphère réductrice due à la présence du carbone peut gêner quelque peu l'oxydation de la prise d'essai par les composants oxydants du fondant, tels que des borates de lithium ($Li_2B_4O_7$) etc. Cette gêne se retrouve bien entendu lorsqu'on coule dans un bécher contenant le solvant acide, mais dans ce cas la perturbation sur les résultats est quasiment nulle grâce à l'effet de normalisation dans la solution acide.

Si, comme on vient de le voir, la présence d'un récipient intérieur en carbone vitreux n'est pas toujours indispensable, il n'en est pas de même en ce qui concerne le récipient extérieur en platine 30, et ceci pour plusieurs raisons :

Une raison principale est que les appareils de préparation d'échantillons d'analyse par fusion inductive s'accommodent généralement mal d'une alternative éventuelle creuset-platine — creuset-carbone. Dans ce type d'appareils, en effet, on peut difficilement remplacer un creuset en platine par un creuset en carbone et réciproquement, car le générateur haute-fréquence qui alimente la bobine à induction n'est accordé, par construction, qu'à un induit de nature déterminée qui, en règle générale d'ailleurs, est du platine. Dans ces conditions, le générateur n'est pas accordé pour un induit en carbone et, dans le cas d'un appareil polyvalent tel que décrit ci-avant, il ne peut l'être, car il alimente le cas échéant également la bobine de préchauffage de la nacelle de coulée, laquelle, en pratique, doit impérativement être en platine.

On pourrait bien entendu résoudre différemment le problème en équipant l'appareil de deux générateurs, mais cette solution présente des inconvénients, en particulier celui d'augmenter sensiblement le coût de l'appareil.

Une autre raison en faveur de la présence systématique du récipient extérieur en platine est que celui-ci protège le récipient interne en carbone contre les risques d'oxydation à chaud au contact de l'air atmosphérique. Là encore, une autre solution pourrait consister à placer le creuset en carbone dans une atmosphère neutre, mais on connaît bien les inconvénients de complexité et autres qu'entraîne une telle solution.

Une autre raison encore réside dans la fonction de sécurité que remplit le récipient extérieur en platine à l'égard des risques de percée ou de rupture que pourrait présenter le récipient en carbone vitreux à cause de sa relative fragilité naturelle.

On a déjà dit que l'un des avantages décisifs de l'invention était l'élargissement du domaine d'application des appareils de préparation d'échantillons d'analyses par fusion-dilution dans un creuset chauffé par induction.

On a vu que cet avantage était obtenu grâce à une modification possible de l'étage de coulée et que la caractéristique de l'invention, à l'origine de cette modification, était précisément le creuset composite platine-carbone vitreux, soit en deux couches accolées, soit en deux récipients distincts et emboîtables.

Un autre avantage résultant directement cette fois du creuset composite, notamment dans sa forme de réalisation en deux récipients distincts et emboîtables, s'exprime en termes de rentabilité, ou si l'on préfère, d'économie financière au niveau du coût unitaire de la fusion des échantillons.

Dans la pratique antérieure à creuset de platine unique (brevet français FR-A-2 381 303 déjà cité), la reprise des creusets usagés par le façonneur de platine se fait à environ 75 % de leur valeur en métal. L'utilisateur perd donc systématiquement le quart du prix du creuset auquel se rajoute le coût de l'usinage pour le nombre de fusions réalisées avec celui-ci. De cette façon, l'incidence du platine dans le prix de revient d'une fusion peut raisonnablement être estimée à plus de 10 francs français, au cours actuel des métaux précieux.

Les expériences réalisées avec un creuset composite, conforme à une caractéristique de l'invention, montrent que pour un récipient intérieur en carbone vitreux de 1 mm d'épaisseur, on peut aisément procéder à plus d'une vingtaine de fusions, avant de devoir le remplacer. Si l'on prend en compte d'un côté la durabilité améliorée du récipient en platine et, de l'autre, le coût relativement modique des récipients en carbone vitreux comparé à celui du platine, on calcule une réduction d'environ 70 % de l'incidence du creuset dans le prix unitaire de la fusion d'un échantillon.

Il va de soi que l'invention ne saurait se limiter à l'exemple décrit en référence à la figure mais peut présenter de nombreuses variantes de réalisation tenant tant au creuset composite pour la fusion qu'à l'étage de coulée.

Ainsi, le creuset composite peut avoir n'importe quelle forme géométrique. Si le creuset est conçu en deux récipients emboîtables, sa forme géométrique est de préférence déterminée de façon que les récipients constitutifs puissent être facilement séparés, puis assemblés à nouveau. On comprend à cet égard que la forme la plus avantageuse est celle du cylindre, de préférence de révolution autour de l'axe de la bobine, ce qui, de surcroît, permet de minimiser l'entrefer de cette dernière donc d'optimiser le couplage électromagnétique et, par voie de conséquence, le rendement électrique de chauffage du creuset.

De même, le récipient intérieur peut légèrement dépasser du récipient extérieur (par exemple de quelques mm) de manière à présenter une prise aisée et faciliter ainsi son introduction dans le récipient extérieur, ou son retrait. Une telle disposition permet en outre d'éviter tout risque de bavures de matière en fusion sur le bord du récipient en platine au cours de la coulée et qui notamment, compliqueraient la récupération de la totalité de la masse constitutive de l'échantillon.

De même encore, les deux récipients emboîtés peuvent présenter entre eux un simple jeu fonctionnel, ou un espace de séparation plus important. Dans ce cas, une collerette, similaire à la collerette 23, est avantageusement prévue sur le récipient intérieur ; elle coopère avec le récipient extérieur 22, de manière à confiner l'atmosphère dans l'espace de séparation et empêcher ainsi une dégradation prématurée du récipient en carbone par oxydation de sa paroi extérieure.

Quant à l'étage de coulée, la partie escamotable 33 réservée à la préparation d'une perle pour l'analyse FRX peut être soit amovible comme dans l'exemple décrit, soit simplement déplaçable sur la console de support 39, de manière à libérer l'orifice 43 pour permettre la coulée dans le bécher. Dans ce cas, les raccords démontables 41 et 42 peuvent fort bien être remplacés par un système à tresses de cuivre dans des manchons souples similaires à ceux déjà décrits en référence à la figure (référence 56-57).

Par ailleurs, l'appareil conforme à l'invention n'est pas impérativement polyvalent et on peut fort bien se contenter d'un appareil spécialisé pour la préparation d'échantillons uniquement en solution dans un solvant destinés à l'absorption atomique ou à la SEO à plasma par exemple.

Dans ce cas, l'unité supérieure 32 comprenant la partie amovible 33, la console support 39 et le bec de soufflage d'air 44 est simplement supprimée.

A noter encore que, dans le cas de l'appareil polyvalent, le pontet non représenté permettant de court-circuiter les bornes 42 lorsque la partie amovible 33 est retirée, peut être remplacé par de nombreux équivalents, par exemple une simple vanne trois voies placée sur le raccordement 55 reliant la bobine de préchauffage 36 à la bobine de fusion 5.

De même enfin, la bobine à induction plate 36 peut être remplacée par de nombreux autres moyens équivalents pour le préchauffage de la nacelle de coulée.

Il est à noter que les solvants pouvant convenir dépendent bien entendu de la nature de l'échantillon à dissoudre. Selon les cas, on pourra utiliser non seulement de l'eau acidulée, mais également de l'eau naturelle ou d'autres milieux de mise en solution adéquats.

**Revendications**

1. Appareil pour la préparation automatisée d'échantillons d'analyse comprenant un bâti supportant deux étages superposés : un étage de fusion comprenant une bobine verticale à induction, alimentée en courant électrique par un générateur haute fréquence, un creuset entouré par ladite bobine et destiné à contenir un mélange à fondre, constitutif de l'échantillon, et un étage de coulée inférieur comprenant des moyens pour recevoir la matière en fusion déversée du creuset et achever la préparation de l'échantillon, appareil caractérisé en ce que le creuset présente une structure composite en deux couches concentriques : une couche extérieure en métal noble et une couche intérieure en matériau réfractaire non friable, bon conducteur de la chaleur et présentant des propriétés de non-mouillabilité à l'égard de la matière constitutive de l'échantillon et en ce que les moyens prévus à l'étage de coulée pour recevoir la matière en fusion sont au moins constitués par un logement destiné à recevoir un récipient contenant un solvant adéquat pour la mise en solution de la matière en fusion.

2. Appareil selon la revendication 1, caractérisé en ce que le récipient intérieur constitutif du creuset est en carbone vitreux.

3. Appareil selon les revendications 1 ou 2, caractérisé en ce que le récipient extérieur constitutif du creuset est en platine ou en alliage de platine.

4. Appareil selon les revendications 1, 2 ou 3, caractérisé en ce que le creuset est constitué de deux récipients distincts emboîtés l'un dans l'autre.

5. Appareil selon la revendication 1, caractérisé en ce que le logement prévu à l'étage de coulée comprend un agitateur magnétique sur lequel vient se poser le récipient contenant le solvant de la matière en fusion.

6. Appareil selon l'une quelconque des revendications précédentes, caractérisé en ce que l'étage de coulée comprend, au-dessus du récipient contenant le solvant, un moyen de chauffage par induction, alimenté en courant électrique par le générateur haute-fréquence, et une nacelle de coulée, en métal noble placée au-dessus du moyen de chauffage, et en ce que ledit moyen de chauffage est monté de façon amovible sur le bâti de l'appareil.

7. Appareil selon la revendication 6, caractérisé en ce que le moyen de chauffage par induction supportant la nacelle de coulée est constitué par une bobine plate de structure spiralée et reliée au générateur haute fréquence par des raccords démontables.

8. Appareil selon la revendication 7, caractérisé en ce que la bobine verticale entourant le creuset et la bobine plate supportant la nacelle sont montées en série à la sortie du générateur haute fréquence et en ce qu'elles sont constituées par un enroulement de tube en cuivre, et en ce que des moyens sont prévus pour assurer une circulation d'eau de refroidissement à l'intérieur du tube en cuivre.

**Claims**

1. An apparatus for automated preparation of analytical samples, comprising a frame supporting two superposed stages : a melting stage including a vertical induction coil electrically-connected to a high-frequency generator, a crucible encompassed by the said coil and holding the sampling material to be melted, and a lower pouring stage comprising the means for both taking in the molten metal from the crucible and ending preparation of the sample, an apparatus characterized in that the structure of the crucible is composite, consisting of two concentric layers : an outer layer of a noble metal and an inner layer of non-friable refractory material with good heat conduction and possessing non-wettability properties with respect to the constituent matter of the sample, and in that the means provided for the pouring stage comprise at least a recess accommodating a container holding an appropriate solvent for solubilizing the molten metal.

2. An apparatus, according to claim 1, characterized in that the constituent inner container of the crucible is of glassy carbon.

3. An apparatus, according to claim 1 or 2, characterized in that the constituent outer container of the crucible is of platinum or a platinum alloy.

4. An apparatus, according to claims 1, 2 or 3, characterized in that the crucible consists of two separate containers nested into one another.

5. An apparatus, according to claim 1, characterized in that the recess provided at the pouring stage comprises a magnetic stirrer that supports the container holding the molten-material solvent.

6. An apparatus, according to any foregoing claim, characterized in that the pouring stage includes, above the container holding the solvent, induction-heating means, energized by the high-frequency generator, and a recessed pouring plate of noble metal, set above the heating means and in that said induction-heating means are detachable from the apparatus frame.

7. An apparatus, according to claim 6, characterized in that the induction-heating means supporting the recessed pouring plate consists of a structurally-coiled slab coil connected to the high-frequency generator by means of detachable connectors.

8. An apparatus, according to claim 7, characterized in that the vertical coil encompassing the crucible and the slab coil supporting the recessed plate are connected in series to the output of the high-frequency generator and in that they consist of a copper-tube winding and in that means are provided for circulating cooling water within the copper tube.

**Ansprüche**

1. Vorrichtung zum automatischen Aufbereiten einer Analysenprobe mit zwei übereinander angeordneten Bereichen eines Gestells, deren oberer eine von einem Hochfrequenzgenerator gespeiste Senkrechte Induktionsspule und einen in diese eingesetezten, zur Aufnahme eines zu schmelzenden Gemischs bestimmten durch die gennante Induktionsspule ungebenen Tiegel aufweist, und deren unterer Bereich Miteel zur Aufnahme der aus dem Tiegel ausgegossenen Schmelze und zur Aufbereitung der Probe aufweist, dadurch gekennzeichnet, daß der Tiegel (7) zwei konzentrische Schichten aufweist, deren äußere (30) aus Edelmetall und deren innere (31) aus feuerfestem, nicht zerreibbaren, gut wärmeleitenden, das die Probe bildende Material nicht benetzenden Material besteht, und daß die Aufnahme der Schmelze im unteren Bereich (4) des Gestells mittels eines einen Behälter (45) aufnehmenden Gehäuses erfolgt, der ein zum Lösen des schmelzflüssigen Materials entsprechendes Lösungsmittel enthält.

2. Vorrichtung nach Anspruch 1, dadurch gekennzeichnet, daß der innere Behälter (31) des Tiegels (7) aus glasigem Kohlenstoff besteht.

3. Vorrichtung nach Anspruch 1 oder 2, dadurch gekennzeichnet, daß der äußere Behälter (30) aus Platin oder einer Platinlegierung besteht.

4. Vorrichtung nach Anspruch 1, dadurch gekennzeichnet, daß der Tiegel (7) aus zwei ineinander passenden Behältern (30 und 31) besteht.

5. Vorrichtung nach Anspruch 1, dadurch gekennzeichnet, daß das in dem unteren Bereich (4) des Gestells vorgesehene Gehäuse einen magnetischen Rührer (48) aufweist, auf dem der das Lösungsmittel enthaltende Behälter (45) ruht.

6. Vorrichtung nach einem der Ansprüche 1 bis 5, dadurch gekennzeichnet, daß im unteren Bereich (4) des Gestells oberhalb des das Lösungsmittel enthaltenden Behälters (45) eine induktive, von einem Hochfrequenzgenerator gespeiste, gegenüber dem Maschinengestell bewegliche Heizquelle (36) und über dieser Heizquelle (36) eine Gießschale (35) aus Edelmetall angeordnet ist.

7. Vorrichtung nach Anspruch 6, dadurch gekennzeichnet, daß die die Gießschale (35) tragende Heizquelle (36) eine ebene Spirale ist und über lösbare Kabel mit dem Hochfrequenzgenerator verbunden ist.

8. Vorrichtung nach Anspruch 7, dadurch gekennzeichnet, daß die senkrechte, den Tiegel (7) umgebende Heizspule (5) und die ebene, die Gießschale (35) tragende Heizspirale (36) in Serie an den Hochfrequenzgenerator angeschlossen sind und aus Kupferrohrwindungen bestehen, die von einem Kühlwasserstrom durchflossen sind.

Fig_unique